# FASCICULE DE BREVET EUROPEEN

(11) **EP 3 158 270 B1**
(45) Date de publication et mention de la délivrance du brevet: **14.02.2018**
(21) Numéro de dépôt: 15734211.4
(22) Date de dépôt: 09.07.2015
(51) Int. Cl.: F24D 19/10, H04L 12/28, H04W 4/02, G06F 1/32, G05D 23/19

(54) **THERMOSTAT CONNECTÉ TEMPS RÉEL À CONSIGNE FLOTTANTE**
ECHTZEIT-THERMOSTAT MIT DYNAMISCHER SOLLWERTREGELUNG
REAL-TIME SMART THERMOSTAT WITH MOVING SET VALUE

(30) Priorité: 09.07.2014 FR 1456628
(43) Date de publication de la demande: 26.04.2017
(73) Titulaire: Ween, 13090 Aix-en-Provence Cedex (FR)
(72) Inventeur: MUNIER, Nathanaël, 78720 Cernay la Ville (FR); SCHAUB, Jean-Laurent, 13480 Cabries (FR)
(74) Mandataire: Regimbeau
(86) Numéro de dépôt international: PCT/EP2015/065734
(87) Numéro de publication internationale: WO 2016/005512

(56) Documents cités:
- WO-A2-2014/015977
- DE-A1-102011 052 467
- US-A1- 2010 127 854
- US-A1- 2010 161 149
- US-A1- 2011 231 020
- US-B1- 8 577 392

## Description

### DOMAINE TECHNIQUE GENERAL

L'invention relève du domaine de l'optimisation de la gestion énergétique.

Plus particulièrement, l'invention concerne un procédé de régulation de la température d'un bâti équipé d'un système de régulation thermique.

### ETAT DE L'ART

La régulation thermique (*via* les systèmes dits CVC (Chauffage, Ventilation et Climatisation), plus connus sous le terme anglo-saxon de HVAC (*Heating, Ventilation and Air-Conditioning*)) représente plus de la moitié de l'énergie utilisée dans une habitation.

Outre l'amélioration de l'isolation et de l'efficacité/rendement des systèmes CVC, des économies d'énergie peuvent être réalisées en contrôlant et en régulant plus efficacement la température de l'habitation.

Plus particulièrement, une optimisation des plages de fonctionnement et des objectifs de température (consigne flottante, c'est-à-dire dynamique) peut être réalisée sans pour autant nuire au confort des occupants de l'habitation. La modélisation thermique, prenant en compte la météorologie locale, permet :
- de maximiser les économies d'énergies,
- d'améliorer le ressenti qualitatif du système par l'occupant.

Une innovation supplémentaire a consisté en la prise en compte des absences et des présences des occupants de l'habitation. Les thermostats évolués peuvent ainsi être configurés pour baisser la consigne sur des plages prédéfinies pendant lesquelles les occupants ne sont pas censés être présents dans l'habitation. Mais si les occupants ne rentrent pas à l'heure prévue par le thermostat, l'habitation sera froide ou aura été chauffée inutilement (respectivement chaude ou refroidie).

Pour résoudre cette difficulté, le document WO 2013020970 propose la géolocalisation des occupants hors de l'habitat. Celle-ci permet de savoir si les occupants s'éloignent ou se rapprochent de l'habitat, et ce dans le but d'ajuster la température de l'habitat.
Le document WO 2014015977 décrit quant à lui notamment un concept d'estimation du temps d'arrivée de l'occupant de l'habitation afin d'ajuster les températures en fonction.

Le document WO2012068495 propose l'abaissement de la consigne après un temps donné dès qu'une absence de l'occupant est détectée.

Enfin, le document WO2013058966 présente un procédé d'apprentissage des habitudes de l'utilisateur en fonction des cycles effectués, afin d'anticiper les températures à contrôler.
Ces technologies connues exploitant la géolocalisation et l'apprentissage local permettent une régulation thermique plus efficace et des économies sensibles, mais elles restent perfectibles.

En particulier, ces techniques sont incapables de prendre en compte les déplacements imprévus dits de proximité (moins d'une demi-heure par exemple), qui représentent 80% des absences d'un utilisateur : aller acheter une pizza, rendre visite à ses parents, partir chez le médecin, etc.

Bien que de telles absences puissent parfois durer des heures, le fait que l'utilisateur puisse rentrer à tout moment en quelques minutes oblige les procédés connus à maintenir l'habitation à température nominale, d'où une consommation d'énergie inutile.

Il serait ainsi souhaitable de disposer d'un procédé de régulation de la température qui permette une régulation thermique optimale y compris lors des absences imprévue, des réelles économies d'énergie, tout en garantissant le confort et la simplicité d'optimisation pour l'utilisateur.

### PRESENTATION DE L'INVENTION

Afin de pallier les limitations présentées précédemment, l'invention propose un procédé de régulation de la température d'un bâti équipé d'un système de régulation thermique configuré pour réguler une température dudit bâti à une température de vie prédéterminée, dans un mode de fonctionnement par défaut, ledit procédé comprenant la mise en oeuvre, par un module de traitement de données, d'étapes de :
(a) Détection d'une absence d'un utilisateur dans le bâti,
(b) Emission à destination du système de régulation thermique d'une consigne de limitation de fonctionnement dudit système par laquelle le système de régulation thermique d'interrompt la régulation de la température du bâti à la température de vie
(c) Estimation en fonction de données de géolocalisation de l'utilisateur d'un temps de trajet retour de l'utilisateur,
(d) Détermination d'une température de retour en fonction d'une température de confort, différente de la température de vie, et dudit temps de trajet retour, la température de retour étant calculée pour permettre au système de régulation thermique d'atteindre la température de confort pendant le temps de trajet retour,
(e) Emission à destination du système de régulation thermique d'une consigne de retour, par laquelle le système de régulation thermique régule la température du bâti à la température de retour.

Grâce à ce procédé, il est possible de faire des économies à chaque absence de l'utilisateur sans dégrader le confort de celui-ci à son retour. En effet, le fait d'appliquer une consigne flottante au lieu de maintenir la température durant l'absence, dans le cas du chauffage, permet de réaliser des économies d'énergies. En outre, grâce au fait de calculer une consigne flottante en fonction de la durée d'absence et du comportement thermique du bâti, on est assuré d'avoir la température de confort au retour de l'utilisateur. La durée d'absence est avantageusement définie par le planning et/ou le temps de trajet et/ou l'apprentissage des lieux d'habitude et/ou la question CQ.

Avantageusement, l'invention comprend les caractéristiques suivantes, prises seules ou en combinaison :
- la consigne de limitation de l'étape (b) consiste à arrêter le système de régulation thermique, ledit système fonctionnant alors dans un mode dit libre dès le début de l'absence de l'utilisateur,
- l'étape (e) n'est mise en en oeuvre que si la température du bâti se trouve hors d'un intervalle défini par les températures de vie et de confort,
- l'étape (b) comprend, lorsque la température du bâti atteint une température extrémale (Te) prédéfinie, l'émission à destination du système de régulation thermique d'une consigne de maintien de température, par laquelle le système de régulation thermique régule la température du bâti à ladite température extrémale,
- la température extrémale, la température de confort et la température de retour sont déterminées par le module de traitement de données en fonction d'au moins des données de modélisation thermique du bâti comprenant des données météorologiques récupérées depuis un serveur central et des caractéristiques thermiques du bâti issues d'un plan d'expérience contenant les données relatives au bâti lors des précédentes utilisations du procédé,
- les étapes (c) à (e) sont répétées, de sorte que la température de retour tende vers la température de confort (Tc) au moment où l'utilisateur est à nouveau présent dans le bâti,
- le calcul de la température de retour prend en compte l'intervalle de temps entre deux géolocalisation en plus de l'estimation du temps de trajet retour,
- l'étape (c) comprend la réception des données de géolocalisation au sens large depuis un terminal mobile de l'utilisateur comprenant des moyens de localisation,
- l'étape (c) comprend l'émission à destination du terminal mobile d'une consigne de question par laquelle le terminal mobile interroge l'utilisateur sur son estimation du temps de trajet retour, de sorte que la température de retour est adaptée en fonction de la réponse de l'utilisateur,
- la détection de l'absence de l'utilisateur est effectuée par au moins un des procédés suivants : la comparaison de données de géolocalisation du terminal mobile de l'utilisateur et de données référence de géolocalisation du bâti, la connexion/déconnexion d'un réseau local, ou la détection d'absence via des capteurs de présence,
- l'étape (c) comprend un filtrage des données de géolocalisation, ledit filtrage permettant d'identifier des situations géostatiques,
- la température de confort a un écart de 0,5 à 5°, préférablement de 0,5 à 2°, et de préférence de 0,8 et 1,2°, par rapport à la température de vie,
- le procédé comprend, lorsque la présence d'un utilisateur (U) est détectée dans le bâti (B), une étape (f) d'émission à destination du système de régulation thermique d'une consigne de régulation de la température par laquelle le système de régulation thermique repasse dans le mode de fonctionnement par défaut,
- le procédé comprend une étape préalable d'émission à destination du système de régulation thermique d'une consigne de pré-limitation avant l'absence de l'utilisateur, de sorte qu'au départ de l'utilisateur, la température de confort soit déjà atteinte,
- la consigne de pré-limitation est déclenchée par apprentissage local des absences de l'utilisateur,
- le procédé comprend les étapes suivantes :
   ∘ l'étape (a) est mise en oeuvre pour chaque utilisateur du bâti,
   ∘ l'étape (b) est mise en oeuvre si l'étape (a) est vérifiée pour chaque utilisateur du bâti,
   ∘ l'étape (c) est mise en oeuvre pour chaque utilisateur du bâti,
   ∘ l'étape (d) est mise en oeuvre en utilisant l'estimation du temps de trajet retour la plus faible obtenue,
- le système de régulation thermique comprend un système de chauffage, et la température de retour est inférieure à la température de confort, elle-même inférieure à la température de vie,
- le système de régulation thermique comprend un système de climatisation, et la température de retour est supérieure à la température de confort, elle-même supérieure à la température de vie.

L'invention propose aussi un ensemble de régulation de la température d'un bâti, comprenant un système de régulation de température, un serveur de traitement de données, comprenant un module de stockage de données et un module de traitement de données, configuré pour mettre en oeuvre :
- un module de détection d'une absence de l'utilisateur,
- un module de déclenchement d'une consigne de limitation de fonctionnement dudit système par laquelle le système de régulation thermique interrompt la régulation de la température du bâti à la température de vie,
- un module d'estimation du temps de trajet retour de l'utilisateur en fonction de données de géolocalisation de l'utilisateur,
- un module de détermination d'une température de retour en fonction d'une température de confort différente de la température de vie et dudit temps de trajet retour, la température de retour étant calculée pour permettre au système de régulation thermique d'atteindre la température de confort pendant le temps de trajet retour,
- un module d'émission à destination du système de régulation thermique d'une consigne de retour, par laquelle le système de régulation thermique régule la température à la température de retour.

Enfin, l'invention propose un bâti comprenant un système de régulation de température, et un thermostat relié à un serveur selon la revendication précédente ou à un serveur adapté pour mettre en oeuvre un procédé précédemment décrit.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente une architecture pour la mise en oeuvre du procédé selon l'invention,
- La figure 2 représente un procédé conforme à l'invention,
- Les figures 3 à 5 représentent des schémas des températures de consigne et des températures du bâti selon des modes de réalisation d'un procédé conforme à l'invention,
- La figure 6 représente un procédé présentant différents modes de réalisation conforme à l'invention,
- Les figures 7a, 7b, 7c représentent l'ajustement des températures de retour en fonction des estimations de temps de trajet retour,
- Les figures 8 à 11 représentent différentes courbes de température de consigne et de température du bâti en fonction de certains paramètres,
- La figure 12 représente un filtrage de géolocalisation,
- La figure 13 représente une anticipation de l'absence de l'utilisateur,
- La figure 14 représente une zone de déplacements usuels,
- La figure 15 représente une courbe de température de bâti dans le cas d'un système de climatisation.
Les courbes de température de consigne sont représentées en trait plein et les courbes de température du bâti sont représentées en pointillés.

### DESCRIPTION DETAILLEE

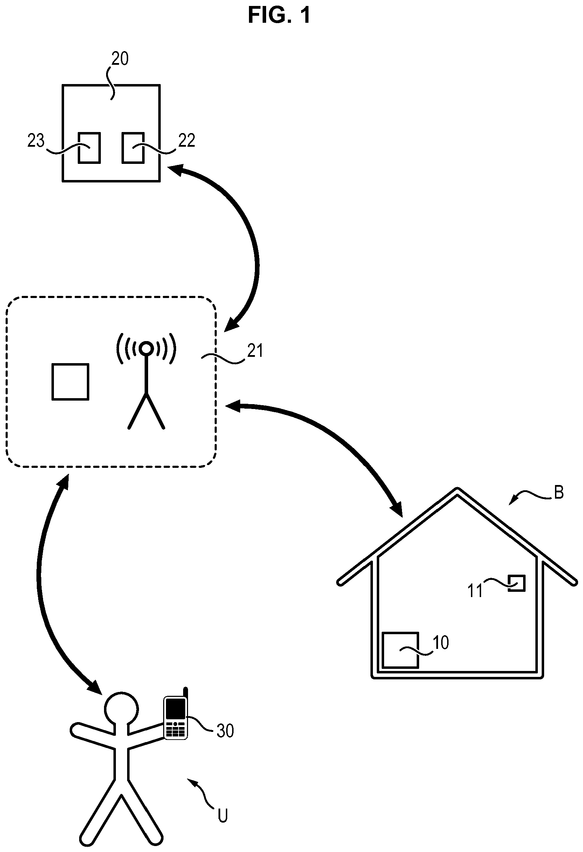

Le présent procédé de régulation thermique est mis en oeuvre dans un environnement du type de celui représenté par la **figure 1****.**

L'invention concerne un procédé de régulation thermique d'un bâti B, le bâti comprenant un système de régulation thermique 10. Le bâti B est habité par au moins un utilisateur U et signifie toute construction dans laquelle peut se trouver un utilisateur U. Typiquement, le bâti B est une maison ou un appartement.

Une sonde de température 11 est connectée à un serveur 20 par un réseau de communication 21, tel qu'un réseau de téléphonie mobile ou internet. La sonde 11 permet notamment de mesurer la température T du bâti B, et envoie un signal au serveur 20.

Un terminal mobile 30 de l'utilisateur U peut être connecté au serveur 20 par le réseau de communication. Le terminal mobile 30 peut être n'importe quel équipement apte à se connecter au réseau de communication 21. Il peut s'agir par exemple d'un smartphone, d'une tablette tactile, etc.

Le terminal mobile 30 comprend typiquement un module de traitement de données, des moyens de localisation (par exemple un GPS - « *global positioning system* », un « système » de triangulation des stations de base, une connexion WIFI, etc.), et des moyens d'interface tel qu'un écran. Le terminal mobile 30 peut être intégré à un véhicule de l'utilisateur U. De façon générale, par « terminal mobile » on entendra tout dispositif disposant de moyens de communications et dont les déplacements coïncident avec ceux de l'utilisateur U.

Le système de régulation thermique 10 est adapté pour réguler une température T du bâti B. Par régulation, on entend un procédé, notamment par rétroaction en prenant compte de la température du bâti, pour établir une consigne de température dans le bâti B. Réguler signifie donc agir sur la température (la faire évoluer à la hausse ou à la baisse) de façon soit active (régulation vers une température cible) soit passive (en arrêtant complètement ou partiellement de chauffer) ou climatiser par exemple).

En fonctionnement par défaut, c'est-à-dire lorsque le bâti B est habité depuis un temps suffisamment long pour que le régime permanent ou standard soit atteint (i.e. un temps significativement long devant un temps caractéristique de changement de température du bâti), la température T est à une température de vie Tv, par exemple 21°C l'hiver et 24°C l'été. Le système de régulation thermique 10 fait office de chauffage et/ou de climatiseur, c'est-à-dire qu'il comprend un système de chauffage et/ou de climatisation.

Le système de régulation thermique 10 peut fonctionner à l'électricité, au gaz, au fioul, etc. et comprendre émetteurs tels que des radiateurs, des planchers dit « chauffants », etc.

On définit une puissance nominale Pₙ dudit système de régulation thermique 10, auquel, pour un bâti B et des conditions météorologiques données, on peut faire correspondre une vitesse de régulation nominale Vₙ, c'est-à-dire une variation nominale de température T du bâti B par unité de temps t. En couplant ces données et des caractéristiques thermiques du bâti B (type de matériau, surface vitrée, type de système de régulation thermique, volume du bâti, etc.) également stockés sur le module de stockage 23 (et par exemple saisies par l'utilisateur U), issues du post-traitement des données stockées dans le module de stockage 23 le bâti B peut être modélisé thermiquement, via notamment une évaluation des flux thermiques. Cette modélisation thermique du bâti B est effectuée par le module de traitement 22 du serveur 20.

Alternativement, l'homme du métier pourra modéliser la dynamique de chauffe de la maison via des données empiriques désignées comme « plan d'expérience ».

Alternativement, le plan d'expérience peut accumuler des données relatives à la dynamique d'évolution de la température T dans le bâti B dans un grand nombre de situations (variété de conditions climatiques, de conditions d'occupation, etc.) et permet d'obtenir des valeurs références de consigne, de température, etc. On comprendra que le plan d'expérience peut, au vu du caractère non-idéal du système de régulation et du bâti (temps de réaction, variabilité, etc.), être légèrement corrigé de sorte à incorporer des marges de sécurité.

Comme mentionné précédemment, le serveur 20 est connecté au réseau de communication 21. Il comprend classiquement un module de traitement de données 22 (tel qu'un processeur) et un module de stockage de données 23 (par exemple un disque dur). Le serveur 20 peut être un équipement dédié (disposé dans le bâti B ou distant), ou peut être intégré à un ordinateur personnel, à un boitier d'accès à Internet, etc. En outre, le serveur 20 peut être intégré au terminal mobile 30

De façon préférée, le serveur 20 reçoit des données météorologiques locales (température extérieure, taux d'humidité, ensoleillement, sens et force du vent, pression atmosphérique, etc.) de la région de l'emplacement du bâti B. Ces données météorologiques proviennent préférablement d'une station météo proche et sont transmises par internet et stockées dans le module de stockage 23 du serveur 20.

La description qui va suivre prend l'exemple d'un système de chauffage. Il suffit de symétriser les valeurs autour de la température de vie Tv pour obtenir le procédé dans le cas d'un système de climatisation. L'homme du métier saura aisément adapter le procédé *ad hoc.*

En outre, le procédé est décrit pour un seul utilisateur U, on évoquera plus loin le cas d'une pluralité d'utilisateurs (famille).

L'objectif de l'invention est d'optimiser les économies d'énergie tout en garantissant une température de confort Tc au retour de l'utilisateur dans le bâti B après une absence quelconque. La température de confort Tc est une température différente de la température de vie et qui lui est différente par exemple de 0, 5° à 5°, préférablement de 0,5 à 2°, de préférence de 0,8° et 1,2°. Dans le cas du système de chauffage, ladite température de confort Tc est inférieure à la température de vie Tv. En effet, l'utilisateur U ne sent pas tout de suite la température réelle du bâti B après une absence et il lui faut un certain temps pour s'accoutumer à l'écart de température entre l'extérieur et le bâti B. Il n'est donc pas nécessaire que le bâti B soit directement à la température de vie Tv lorsque l'utilisateur U rentre. Durant le temps d'accoutumance, la température T va évoluer de la température de confort Tc à la température de vie Tv, sans que l'utilisateur U ne souffre du froid. La température de confort Tc est donc une température de transition qui permet d'améliorer les économies d'énergies. Il est à noter que, dans certains cas, la température de confort Tc peut être variable, en fonction des conditions météorologiques extérieures ou des saisons par exemple.

La température de confort Tc peut être calculée par le module de traitement de données 22 du serveur 20 grâce au plan d'expérience et/ou à la modélisation thermique du bâti B, afin de l'adapter en fonction des périodes, et/ou déterminée par l'utilisateur U. Le temps nécessaire pour passer de Tc à Tv doit être inférieur au temps d'adaptation du corps à son environnement, afin que celui-ci ne ressente pas la différence de température.

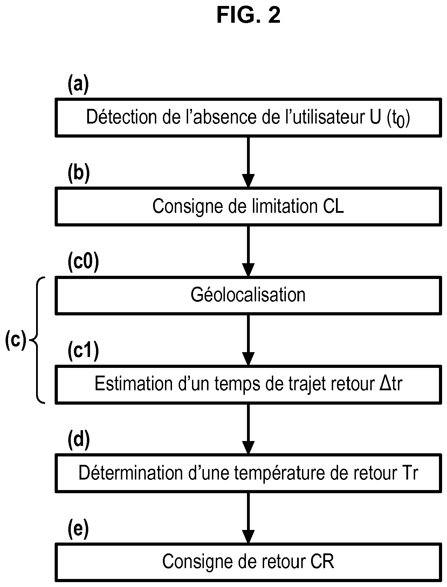

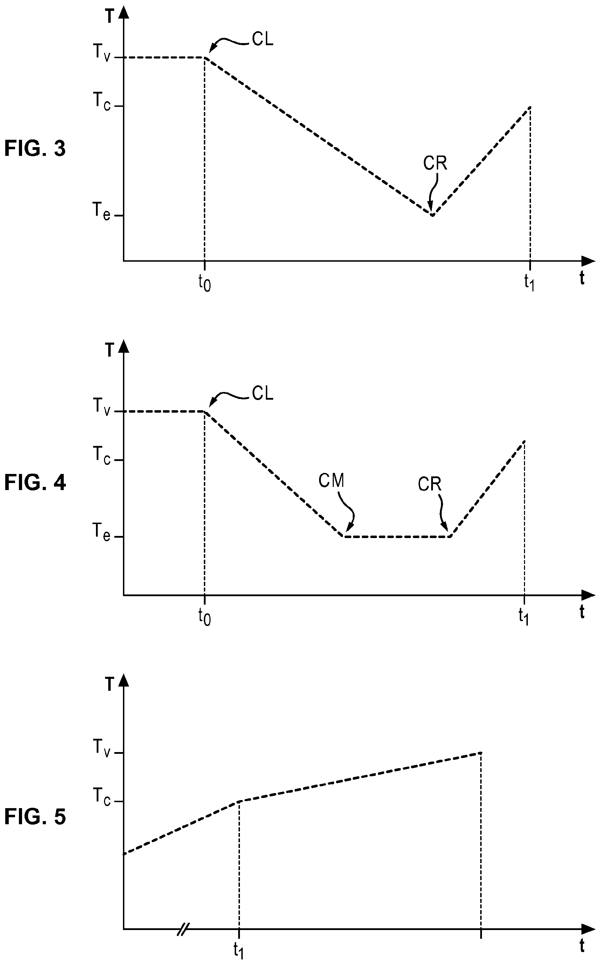

En référence aux **figures 2** **et** **3****,** dans une première étape (a), l'absence de l'utilisateur U du bâti B est détectée lorsque l'utilisateur U quitte le bâti B, au temps t₀.

L'absence t₀ de l'utilisateur U peut être détectée par comparaison des données de localisations fournies par le terminal mobile 30 et des données de localisation du bâti B. La comparaison peut être effectuée par le terminal mobile 30 ou par le serveur 20. Alternativement, l'absence de l'utilisateur U peut se faire par détection de la fermeture d'une porte d'entrée, ou par signalisation de l'utilisateur U, à l'aide par exemple d'un interrupteur, par perte de signal WIFI, par déconnexion d'un réseau local, ou par détection via des capteurs de présence.

Dans une seconde étape (b) (voir **figures 2****,** **3**), une consigne de limitation CL de fonctionnement est envoyée au système de régulation thermique 10. Dans le cas du système de chauffage, la consigne de limitation CL est en l'occurrence une consigne de baisse par laquelle le système de régulation thermique 10 régule à la baisse la température T du bâti B. L'invention fonctionne en mode dit « libre », aussi appelé « intermittence libre », c'est-à-dire que la température T la plus basse atteignable est atteinte durant chaque absence. La consigne de limitation CL peut intégrer une consigne de température ou non.

La consigne de limitation CL peut consister soit à diminuer la puissance du système de régulation thermique 10, soit à l'interrompre complètement, ce qui permet une baisse plus rapide de la température T. Dans tous les cas on comprendra que la consigne de limitation entraîne une baisse de la consommation énergétique de système de régulation thermique 10, et donc du bâti B.

L'invention prévoit en outre une consigne de maintien CM dans le cas où la température T du bâti B atteint une température extrémale Te (voir **figure 4**). La température extrémale est généralement établie par des organismes de protection publique. Typiquement, il peut s'agir d'une température minimale de 8°C en France. L'utilisateur peut à sa convenance décider préalablement quelle température extrémale Te choisir ou choisir de laisser le module de traitement de données 22 la déterminer. Typiquement, la consigne de limitation CL peut inclure une consigne de température égale à la température extrémale Te.

Le fonctionnement du procédé reste inchangé.

Dans une troisième étape (c), une géolocalisation de l'utilisateur U est effectuée dans une première partie c1. Dans une deuxième partie c2, le temps de trajet retour Δtr de l'utilisateur U est estimé en fonction des données de géolocalisation de l'utilisateur U.

Les données de géolocalisation sont typiquement issues des moyens de localisation du terminal mobile 30 de l'utilisateur U. L'estimation du temps de trajet retour Δtr est effectuée par analyse de la position de l'utilisateur U et des plans routiers connus, des vitesses des moyens de transports (voiture, métro, pied, vélo, etc.), de l'état du trafic, etc.

Ladite analyse est effectuée par le serveur 20 après envoi des données de géolocalisation par le terminal mobile 30.

Alternativement, ladite analyse peut être effectuée par le terminal mobile 30 qui ensuite envoie ladite estimation au serveur 20 *via* le réseau de communication 21.

Dans une quatrième étape (d), une température de retour Tr est calculée en fonction notamment de la température de confort Tc et dudit temps de retour Δtr. Par « température de retour », on entend une température du bâti B à partir de laquelle le système de régulation thermique 10 est capable dans le temps de retour Δtr d'atteindre la température de confort Tc. En d'autres termes, cette température de retour Tr est calculée pour garantir un écart de température avec la température de confort Tc qui soit rattrapable par le système de régulation thermique 10 pendant le temps de retour Δtr. Afin d'affiner le plus justement possible cette température de retour, l'estimation de la température de retour Tr fait avantageusement intervenir le plan d'expérience ou bien les données thermodynamiques telles que la puissance nominale Pₙ du système de régulation thermique 10 et sa consommation, la modélisation thermique du bâti B (caractéristiques du bâti et données météorologiques).

Le calcul est effectué par le module de traitement 22 du serveur 20 et intègre éventuellement, comme expliqué, une marge de sécurité, à la hausse, afin de palier à un éventuel retour plus rapide que prévu (excès de vitesse, raccourci non prévu) et aux imprécisions de mesure et/ou à la non-uniformité de la chaleur dans le bâti B.

La température de retour Tr est donc (dans le cas du chauffage) la température la plus basse à laquelle le bâti B peut descendre pour laquelle la température de confort Tc puisse être atteinte lorsque l'utilisateur U rentre dans le bâti B.

Dans le cas du système de chauffage, la température de retour Tr est inférieure ou égale à la température de confort Tc.

Dans une cinquième étape (e) (voir **figures 2****,** **3**), une consigne de retour CR est émise, par laquelle le système de régulation thermique 10 régule la température T à la température de retour Tr.

Typiquement, la consigne est émise par le serveur 20 à destination du thermostat 11 qui commande le système de régulation thermique 10.

Le procédé comprend alors avantageusement une étape (f) d'émission d'une consigne de régulation de la température T pour passer de la température de confort Tc à la température de vie Tv lorsque la présence d'un utilisateur U est détectée dans le bâti B (voir **figure 5**). Il s'agit d'un retour au mode de fonctionnement par défaut.

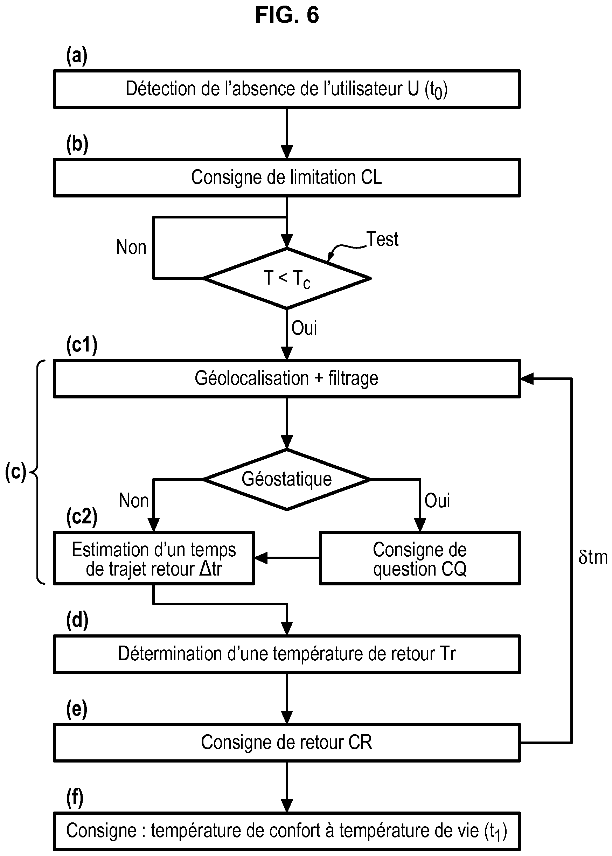

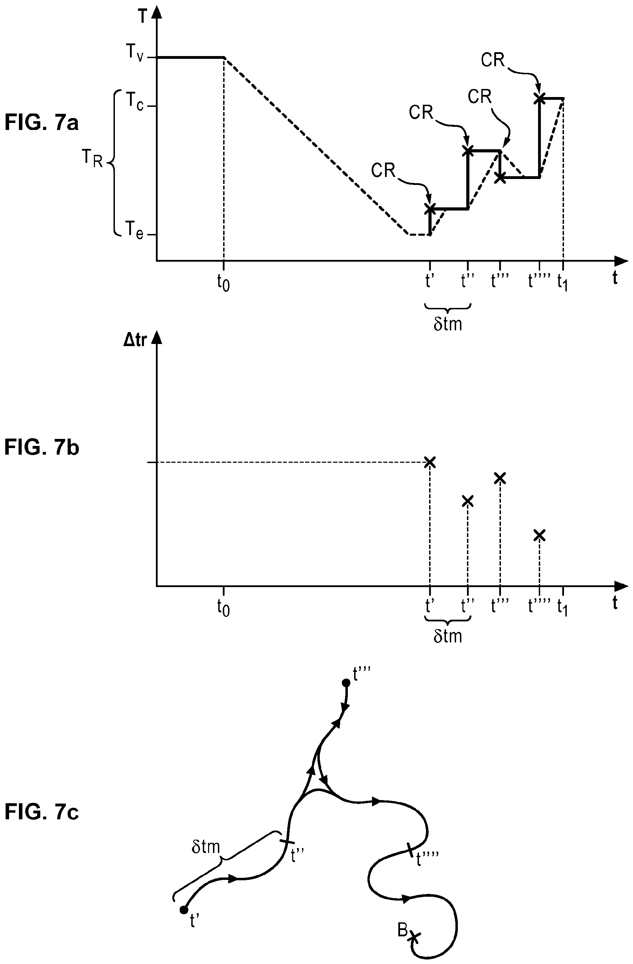

Afin d'optimiser au maximum les économies d'énergies, les étapes (c) à (e) sont répétées à intervalles δₜₘ, de préférence réguliers (voir **figure 6**). En effet, le retour de l'utilisateur U étant souvent inconnu, il est nécessaire que le système réévalue la consigne de retour CR afin de l'ajuster à la température de retour Tr optimale, c'est-à-dire la plus basse possible tout en permettant au système de chauffage d'atteindre la température de confort Tc au retour de l'utilisateur U. Sur les **figures 7a, 7b, 7c****,** où t', t" et t"' représentent les instants auxquels sont effectués les géolocalisations, les températures de retour Tr sont ajustés en fonction de l'estimation du temps de trajet retour Δtr lié à la géolocalisation. La courbe de température de consigne obtenue est ainsi en forme de palier, chaque fin de palier correspondant au lancement d'une consigne de retour CR.

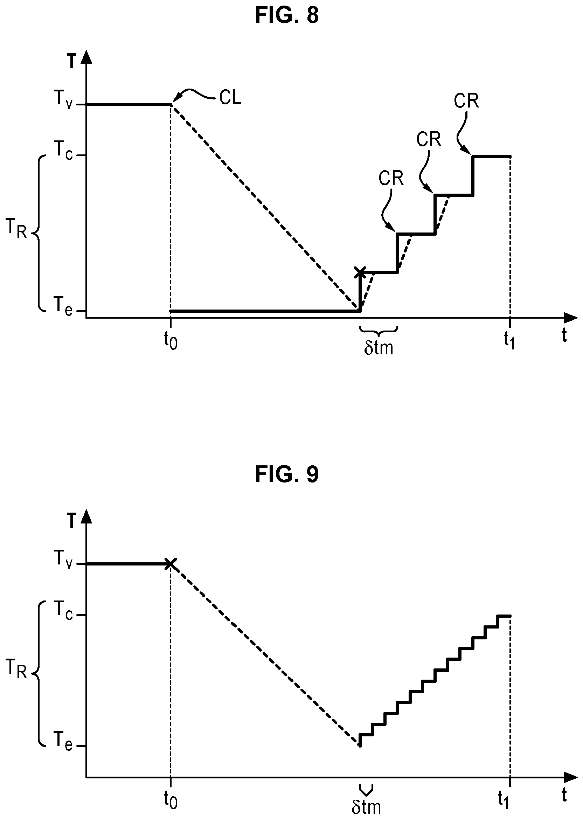

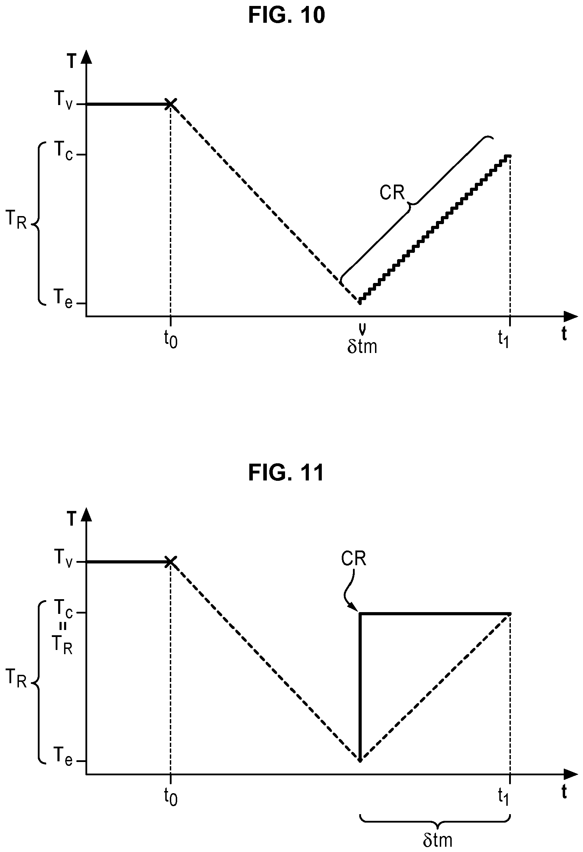

Les **figures 8** à **11** illustrent différentes courbes de température de consigne (trait plein) et de température du bâti B (trait pointillé) selon la durée de l'intervalle δₜₘ. Plus l'intervalle δₜₘ est faible et plus les paliers sont courts (voir **figure 9**). Lorsque l'intervalle δₜₘ tend vers 0, c'est-à-dire que la localisation et l'envoi de consigne de retour CT se font en quasi-continu, la courbe de température de consigne tend vers une courbe de température « lissée » (voir **figure 10**). Alternativement, on comprendra que l'invention n'est pas limitée à une répétition régulière des étapes (c) à (e). En particulier, dans le cas où il n'est plus possible d'obtenir de données de géolocalisation (par exemple si l'utilisateur se trouve dans un tunnel, ou si son terminal mobile est coupé), il est possible de définir par sécurité la température de retour Tr égale à la température de confort Tc : la courbe de température T ne présente alors pas de palier (voir **figure 11****).** L'activation de la sécurité ne se fait que lorsque la température T est inférieure à la température de confort Tc. Alternativement, en cas de perte de données de géolocalisation, le procédé bascule automatiquement sur un mode de régulation programmable basé sur les heures de présence et d'absence et/ou la présence effective de l'utilisateur ou une saisie sur le terminal 30 de la température T du bâti B souhaitée.

Il est à noter que la température de retour Δtr correspond en fait à la température minimale pour que le système de régulation thermique 10 puisse rejoindre la température de confort Tc à une itération (δₜₘ) près. Ainsi, la température de retour Tr peut anticiper cette itération. En d'autres termes, cette température de retour Tr est calculée pour garantir un écart de température avec la température de confort Tc qui soit rattrapable par le système de régulation thermique 10 pendant le temps de retour Δtr auquel on a retranché l'intervalle δₜₘ. Lorsque l'intervalle δₜₘ se réduit, l'intervalle devient faible par rapport à l'estimation du temps de retour Δtr et il devient ainsi possible d'assimiler les deux valeurs, de sorte que la convergence de la température du bâti B vers la température de confort Tc est assurée : quand δₜₘ tend vers 0, la température de retour Tr tend vers la température de confort Tc (voir **figure 10**). Il peut mettre être possible de modéliser Δtr comme une fonction continue du temps (mise à jour à chaque mise en oeuvre des étapes (c) à (e), i.e. tous les δₜₘ).

En outre, grâce à la marge de sécurité éventuellement prévue dans l'évaluation de la température de retour Tr et aux imprécisions de mesure et/ou de non-uniformité de la chaleur dans le bâti B, le bâti est effectivement à la température de confort Tc lorsque l'utilisateur rentre au bâti B.

Il est important de noter que les courbes de température T du bâti B sont distinctes des courbes de température de consigne.

Les étapes (c) à (e) peuvent aussi être effectuées dynamiquement, c'est-à-dire que la température de retour Tr est une fonction affine de l'estimation du temps de retour Δtr. Dans ce mode de réalisation, la température T du bâti B peut suivre la consigne de la température de retour Tr, de sorte que la température du bâti converge mathématiquement vers la température de confort Tc. Δtr devient alors une fonction continue du temps.

Selon un mode de réalisation (voir **figure 6**), le procédé intègre une étape de test au début de l'étape (c) durant lequel la température T du bâti B est mesurée : si ladite température T se situe entre la température de vie Tv et la température de confort Tc, alors l'étape (c) n'est pas déclenchée. Un tel test permet de s'assurer que la température T descend effectivement sous la température de confort Tc (dans le cas du système de chauffage) avant d'effectuer des géolocalisations et des consignes de retour CR. Alternativement, afin de fiabiliser le système et d'anticiper la détection d'habitude, les étapes (c) à (e) sont lancées en parallèle de l'étape (b) dès le début de l'absence. Mais le résultat des étapes de (c) à (e) n'est pris en compte (i.e. la consigne de retour CR est émise) que lorsque l'étape de test est vérifiée. Dans ce mode de réalisation, l'étape de test se trouve soit à la même position que précédemment, sauf que les résultats des étapes (c) et (d) ne sont pas pris en compte, soit entre les étapes (d) et (e).

Selon un mode de réalisation, le procédé intègre le calcul de la dérivée de la position de l'utilisateur U ou la dérivée de l'estimation du temps de trajet retour Δtr, afin d'établir une tendance d'éloignement ou de rapprochement du bâti B. Typiquement, dès qu'un éloignement est détecté, le procédé reprend à l'étape (b) de façon à optimiser les économies d'énergie et dès qu'un rapprochement est détecté, le procédé reprend à la deuxième partie de l'étape (c). Avoir recours aux tendances est particulièrement avantageux dans le cas où l'on tient compte de l'intervalle δₜₘ en plus de l'estimation de temps de trajet retour Δtr pour le calcul la consigne de retour CR, puisque la tendance permet de détecter un éloignement ou un rapprochement et que l'intégration de l'intervalle δₜₘ pour le calcul de la consigne de retour CR présuppose une anticipation du déplacement de l'utilisateur U. Dans un tel cas, l'étape (c) peut être mise en oeuvre avant que le test préliminaire précédemment décrit ne soit vrai, de sorte à esquisser une tendance avant de franchir la température de confort Tc.

Afin de limiter les consignes dites trépidantes, liées à des géolocalisation proches (piétinement ou trajet aller-retour de quelques dizaines de mètres par exemple) dites géostatiques, un filtrage peut être appliqué à l'étape (c). Ce filtrage est typiquement effectué par le module de traitement 22 du serveur 20.

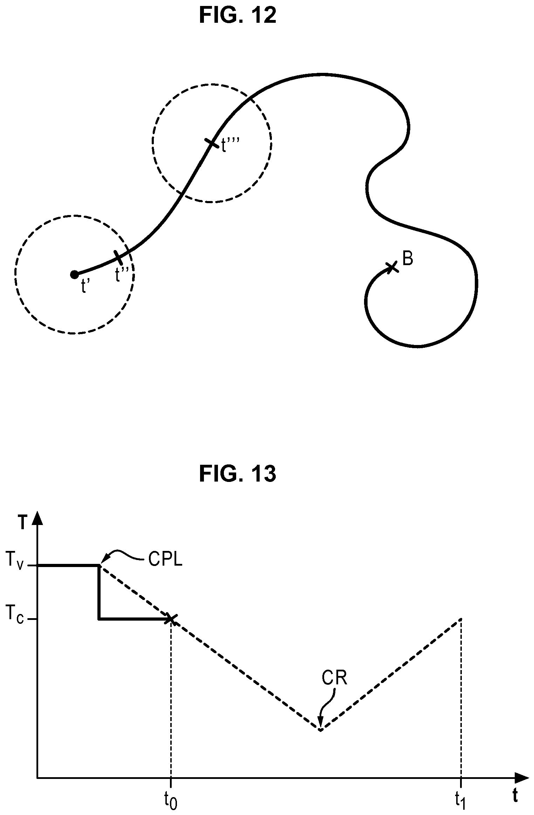

Par exemple, le filtrage peut consister à créer un cercle d'un certain diamètre autour d'une position de géolocalisation et, tant qu'aucune géolocalisation n'identifie l'utilisateur U en dehors de ce cercle, aucune nouvelle température de retour Tr n'est mise à jour et aucune consigne de retour CR n'est émise. Dès qu'une géolocalisation identifie l'utilisateur U en dehors de ce cercle, un nouveau cercle est créé autour de ladite géolocalisation. Sur la **figure 12****,** où t', t" et t'" représentent les instants auxquels sont effectués les géolocalisation, la géolocalisation à t' et t" sont considérées comme géostatique ; un tel filtrage est mis en oeuvre durant la première partie c1 de l'étape (c). Alternativement, le filtrage peut consister à créer un intervalle de temps de trajet de retour autour d'une estimation de temps de trajet retour Δtr et à vérifier si lesdites estimations Δtr successives se trouvent à l'intérieur dudit intervalle, auquel cas aucune consigne de retour Tr n'est émise ; dès qu'une estimation est hors de l'intervalle, un nouvel intervalle est créé autour de cette valeur. Un tel filtrage est mis en oeuvre durant la deuxième partie c2 de l'étape (c).

De tels filtrages contribuent à obtenir une courbe de température T en palier.

Selon un mode de réalisation, le serveur 20 comprend un procédé d'apprentissage local, par accumulation des données issues de l'utilisateur U dans une base d'apprentissage stockée sur le module de traitement 23.

Cet apprentissage local permet d'anticiper l'absence de l'utilisateur U et, lors d'une étape préalable a0 durant laquelle une consigne de pré-limitation CPL est émise à un temps donné avant l'absence de l'utilisateur U, de sorte qu'au moment t₀ de l'absence de l'utilisateur U, le bâti B est déjà à la température de confort Tc (voir **figure 13**). La consigne de pré-limitation CPL est ainsi équivalente à la consigne de limitation CL, sauf qu'elle est émise avant qu'une absence ne soit détectée. On comprendra alors que la consigne de limitation CL émise à l'étape (a) est une confirmation de la consigne de pré-limitation. En cas d'erreur, la température de confort n'étant pas ressentie par le corps, celle-ci peut être remontée sans désagrément pour l'occupant. L'étape (a) peut dans ce cas comprendre la mise à jour de la base d'apprentissage.

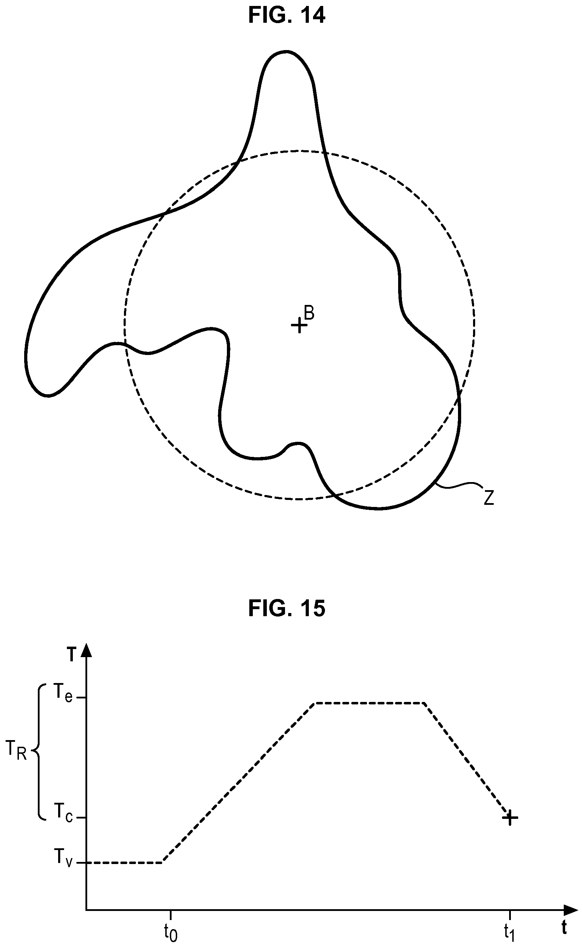

Cet apprentissage local permet aussi de définir des lieux d'habitude ou une zone Z de déplacements usuels (voir **figure 14**). A l'origine, cette zone Z peut être définie comme un disque de rayon 100 km par exemple, puis, suite aux habitudes de l'utilisateur, peut être affinée. Une telle zone Z couvre 95% des déplacements quotidien et est particulièrement adaptée pour déterminer les déplacements et affiner la valeur de la température de retour Tr.

Selon un mode de réalisation, l'étape (c) intègre une consigne de question CQ qui interroge l'utilisateur U, *via* le terminal mobile 30, sur son estimation du temps de trajet retour Δtr. Selon la réponse de l'utilisateur, la consigne de retour CR est adaptée. La consigne de question CQ est ainsi effectuée après la géolocalisation. En particulier, cette question peut être adressée à l'utilisateur via une application du terminal mobile ou *via* des notifications push (message d'alerte se signalisant à l'utilisateur U même lorsque l'application est fermée) auquel un simple contact permet de répondre. La réponse fournie par l'utilisateur U permet d'optimiser les économies d'énergie, en évitant que la température de retour Tr calculée par l'étape (c) soit maintenue inutilement. En effet, la température de retour Tr est calculée pour que le bâti B puisse être à la température de confort Tc lorsque l'utilisateur U rentre, l'utilisateur U pouvant commencer son trajet de retour à n'importe quel moment. En revanche, s'il est prévu que l'utilisateur ne rentre pas, la température de retour Tr peut ainsi être plus faible (dans le cas d'un système de chauffage toujours).

Ce mode de réalisation s'applique particulièrement avantageusement lorsque l'utilisateur U est en dehors de la zone Z de déplacements usuels ou, à l'inverse, proche de chez lui : en effet, un utilisateur U à quelques minutes du bâti B va faire que la température de retour Tr du bâti B sera maintenue très proche de la température de confort Tc alors que l'utilisateur U peut être absent pour toute la journée.

Il est préférable de limiter l'utilisation de la consigne de question CQ afin de limiter les interventions de l'utilisateur U dans la gestion du système de régulation thermique 10.

En particulier, la consigne de question CQ est avantageusement employée uniquement si le filtrage défini pour l'étape (c) précédemment décrit a permis de détecter une position géostatique.

En outre le procédé s'applique à plusieurs utilisateurs U. Dans ce cas, l'étape (a) est mise en oeuvre pour chaque utilisateur U du bâti B, et l'étape (b) est mise en oeuvre si l'étape (a) est vérifiée pour chaque utilisateur U du bâti B : la consigne de limitation CL est émise si et seulement si aucun utilisateur U n'est présent dans le bâti B. L'étape (c) est mise en oeuvre pour chaque utilisateur U, c'est-à-dire que la géolocalisation et l'estimation du temps de trajet retour est effectuée pour chaque utilisateur et l'étape (d) est effectuée pour l'estimation de temps de trajet retour Δtr la plus faible obtenue parmi toutes les estimations Δtr.

Le procédé s'applique aussi à une pluralité de bâti B. Dans ce cas, chaque bâti B est traité indépendamment.

Ainsi qu'il l'a été mentionné, le procédé s'applique aussi bien aux systèmes de chauffage qu'aux systèmes de climatisation.

Dans ce deuxième cas, le système de régulation thermique 10 comprend un système de climatisation, la température de retour Tr étant supérieure à la température de confort Tc, elle-même supérieure à la température de vie Tv (voir **figure 15**).

## Revendications

1. Procédé de régulation de la température d'un bâti (B) équipé d'un système de régulation thermique (10) configuré pour réguler une température (T) dudit bâti (B) à une température de vie (Tv) prédéterminée, dans un mode de fonctionnement par défaut, ledit procédé comprenant la mise en oeuvre, par un module de traitement de données (22), d'étapes de :
(a) Détection d'une absence (t₀) d'un utilisateur (U) dans le bâti (B),
(b) Emission à destination du système de régulation thermique (10) d'une consigne de limitation (CL) de fonctionnement dudit système (10) par laquelle le système de régulation thermique interrompt la régulation de la température (T) du bâti (B) à la température de vie (Tv),
(c) Estimation en fonction de données de géolocalisation de l'utilisateur (U) d'un temps de trajet retour (Δtr) de l'utilisateur (U),
(d) Détermination d'une température de retour (Tr) en fonction d'une température de confort (Tc) différente de la température de vie (Tv) et dudit temps de trajet retour (Δtr), la température de retour (Tr) étant calculée pour permettre au système de régulation thermique (10) d'atteindre la température de confort (Tc) pendant le temps de trajet retour (Δtr),
(e) Emission à destination du système de régulation thermique (10) d'une consigne de retour (CR), par laquelle le système de régulation thermique (10) régule la température (T) du bâti (B) à la température de retour (Tr),
dans lequel la température de confort (Tc) a un écart de 0,5 à 5°, préférablement de 0,5 à 2°, et de préférence de 0,8 et 1,2°, par rapport à la température de vie (Tv).

2. Procédé selon la revendication 1, dans lequel la consigne de limitation (CL) de l'étape (b) consiste à arrêter le système de régulation thermique (10), ledit système (10) fonctionnant alors dans un mode dit libre dès le début de l'absence de l'utilisateur (U).

3. Procédé selon l'une quelconque des revendications précédentes, dans lequel l'étape (e) n'est mise en oeuvre que si la température (T) du bâti (B) se trouve hors d'un intervalle défini par les températures de vie (Tv) et de confort (Tc).

4. Procédé selon l'une quelconque des revendications précédentes, dans lequel l'étape (b) comprend, lorsque la température du bâti (B) atteint une température extrémale (Te) prédéfinie, l'émission à destination du système de régulation thermique (10) d'une consigne de maintien (CM) de température, par laquelle le système de régulation thermique (10) régule la température (T) du bâti (B) à ladite température extrémale (Te).

5. Procédé selon la revendication 4, dans lequel la température extrémale (Te), la température de confort (Tc) et la température de retour (Tr) sont déterminées par le module de traitement de données (21) en fonction d'au moins des données de modélisation thermique du bâti (B) comprenant des données météorologiques récupérées depuis un serveur central (20) et des caractéristiques thermiques du bâti (B).

6. Procédé selon l'une quelconque des revendications précédentes, dans lequel les étapes (c) à (e) sont répétées, de sorte que la température de retour (Tr) tende vers la température de confort (Tc) au moment où l'utilisateur (U) est à nouveau présent (t₁) dans le bâti (B).

7. Procédé selon la revendication 6, dans lequel le calcul de la température de retour prend en compte l'intervalle de temps (δₜₘ) entre deux géolocalisation en plus de l'estimation du temps de trajet retour (Δtr).

8. Procédé selon l'une quelconque des revendications précédentes, dans lequel l'étape (c) comprend la réception des données de géolocalisation depuis un terminal mobile (30) de l'utilisateur (U) comprenant des moyens de localisation.

9. Procédé selon la revendication 8, dans lequel l'étape (c) comprend l'émission à destination du terminal mobile (30) d'une consigne de question (CQ) par laquelle le terminal mobile (30) interroge l'utilisateur (U) sur son estimation du temps de trajet retour (Δtr), de sorte que la température de retour (Tr) est adaptée en fonction de la réponse de l'utilisateur (U).

10. Procédé selon l'une des revendications 8 et 9, dans lequel la détection de l'absence de l'utilisateur (U) est effectuée soit par comparaison de données de géolocalisation du terminal mobile (30) de l'utilisateur (U) et de données référence de géolocalisation du bâti (B), soit par détection de déconnexion d'un réseau local, soit par détection d'absence via des capteurs de présence

11. Procédé selon l'une des revendications 8 à 10, dans lequel l'étape (c) comprend un filtrage des données de géolocalisation, ledit filtrage permettant d'identifier des situations géostatiques.

12. Procédé selon l'une quelconque des revendications précédentes, comprenant, lorsque la présence d'un utilisateur (U) est détectée dans le bâti (B), une étape (f) d'émission à destination du système de régulation thermique (10) d'une consigne de régulation de la température par laquelle le système de régulation thermique (10) repasse dans le mode de fonctionnement par défaut.

13. Procédé selon l'une quelconque des revendications précédentes, comprenant une étape préalable (a0) d'émission à destination du système de régulation thermique (10) d'une consigne de pré-limitation (CPL) avant l'absence de l'utilisateur (U), de sorte qu'au départ de l'utilisateur (U), la température de confort (Tc) soit déjà atteinte.

14. Procédé selon la revendication 13, dans lequel la consigne de pré-limitation (PCL) est déclenchée par apprentissage local des absences de l'utilisateur (U).

15. Procédé selon l'une quelconque des revendications précédentes, dans lequel :
- l'étape (a) est mise en oeuvre pour chaque utilisateur (U) du bâti (B),
- l'étape (b) est mise en oeuvre si l'étape (a) est vérifiée pour chaque utilisateur (U) du bâti,
- l'étape (c) est mise en oeuvre pour chaque utilisateur (U) du bâti (B),
- l'étape (d) est mise en oeuvre en utilisant l'estimation du temps de trajet retour (Δtr) la plus faible obtenue.

16. Procédé selon l'une quelconque des revendications précédentes, dans lequel :
- le système de régulation thermique (10) comprend un système de chauffage,
- la température de retour (Tr) est inférieure à la température de confort (Tc), elle-même inférieure à la température de vie (Tv).

17. Procédé selon l'une quelconque des revendications 1 à 15, dans lequel :
- le système de régulation thermique (10) comprend un système de climatisation,
- la température de retour (Tr) est supérieure à la température de confort (Tc), elle-même supérieure à la température de vie (Tv).

18. Ensemble de régulation de la température d'un bâti, comprenant un système de régulation de température (10), un serveur de traitement de données (20), comprenant un module de stockage (23) de données et un module de traitement de données (22), configuré pour mettre en oeuvre:
- un module de détection d'une absence de l'utilisateur (U),
- un module de déclenchement d'une consigne de limitation (CL) de fonctionnement dudit système (10) par laquelle le système de régulation thermique interrompt la régulation de la température (T) du bâti (B) à la température de vie (Tv),
- un module d'estimation du temps de trajet retour de l'utilisateur (U) en fonction de données de géolocalisation de l'utilisateur (U),
- un module de détermination d'une température de retour (Tr) en fonction d'une température de confort (Tc) différente de la température de vie (Tv) et dudit temps de trajet retour, la température de retour (Tr) étant calculée pour permettre au système de régulation thermique (10) d'atteindre la température de confort (Tc) pendant le temps de trajet retour (Δtr),
- un module d'émission à destination du système de régulation thermique (10) d'une consigne de retour (CR), par laquelle le système de régulation thermique régule la température (T) à la température de retour (Tr),
dans lequel la température de confort (Tc) a un écart de 0,5 à 5°, préférablement de 0,5 à 2°, et de préférence de 0,8 et 1,2°, par rapport à la température de vie (Tv).

19. Bâti (B) comprenant un système de régulation de température (10), et un thermostat (11) relié à un serveur selon la revendication précédente (20) ou à un serveur adapté pour mettre en oeuvre un procédé selon l'une quelconque des revendications 1 à 17.

## Patentansprüche

1. Verfahren zur Regelung der Temperatur eines Bauwerks (B), das mit einem Wärmeregulierungssystem (10) ausgerüstet ist, das so konfiguriert ist, dass es eine Temperatur (T) des Bauwerks (B) auf eine vorbestimmte Dauertemperatur (Tv) in einem Standardfunktionsmodus regelt, wobei das Verfahren den Einsatz der folgenden Schritte durch ein Datenverarbeitungsmodul (22) umfasst:
(a) Erkennung einer Abwesenheit (t₀) eines Benutzers (U) im Bauwerk (B),
(b) Ausgabe einer Anweisung (CL) an das Wärmeregulierungssystem (10) zur Funktionsbegrenzung des Systems (10) mit der das Wärmeregulierungssystem die Regelung der Temperatur (T) des Bauwerks (B) bei der Dauertemperatur (Tv) unterbricht,
(c) Schätzung einer Rückkehrzeit (Δtr) des Benutzers (U) gemäß Ortsbestimmungsdaten des Benutzers (U),
(d) Bestimmung einer Rückkehrtemperatur (Tr) je nach einer sich von der Dauertemperatur (Tv) und der Rückkehrzeit (Δtr) unterscheidenden Komforttemperatur (Tc), wobei die Rückkehrtemperatur (Tr) so berechnet wird, dass das Wärmeregulierungssystem (10) während der Rückkehrzeit (Δtr) die Komforttemperatur (Tc) erreichen kann,
(e) Ausgabe eines Rückkehrsollwerts (CR) an das Wärmeregulierungssystem (10), mit dem das Wärmeregulierungssystem (10) die Temperatur (T) des Bauwerks (B) auf die Rückkehrtemperatur (Tr) regelt,
wobei die Komforttemperatur (Tc) eine Abweichung von 0,5 bis 5°, bevorzugt von 0,5 bis 2°, und am besten von 0,8 bis 1,2° gegenüber der Dauertemperatur (Tv) aufweist.

2. Verfahren nach Anspruch 1, wobei die Begrenzungsanweisung (CL) des Schritts (b) darin besteht, das Wärmeregulierungssystem (10) abzuschalten, wobei das System (10) dann ab Beginn der Abwesenheit des Benutzers (U) in einem sogenannten freien Modus funktioniert.

3. Verfahren nach einem der vorstehenden Ansprüche, wobei der Schritt (e) nur eingesetzt wird, wenn die Temperatur (T) des Bauwerks (B) außerhalb eines von der Dauertemperatur (Tv) und der Komforttemperatur (Tc) definierten Intervalls liegt.

4. Verfahren nach einem der vorstehenden Ansprüche, wobei der Schritt (b), wenn die Temperatur des Bauwerks (B) eine vordefinierte Extremtemperatur (Te) erreicht, die Ausgabe eines Sollwerts zur Temperaturhaltung (CM) an das Wärmeregulierungssystem (10) umfasst, mit dem das Wärmeregulierungssystem (10) die Temperatur (T) des Bauwerks (B) auf die Extremtemperatur (Te) regelt.

5. Verfahren nach Anspruch 4, wobei die Extremtemperatur (Te), die Komforttemperatur (Tc) und die Rückkehrtemperatur (Tr) vom Datenverarbeitungsmodul (21) in Abhängigkeit von zumindest den Wärmemodelldaten des Bauwerks (B) bestimmt werden, die von einem Zentralserver (20) gewonnene Wetterdaten sowie Wärmemerkmale des Bauwerks (B) umfassen.

6. Verfahren nach einem der vorstehenden Ansprüche, wobei die Schritte (c) bis (e) wiederholt werden, so dass die Rückkehrtemperatur (Tr) in dem Moment, in dem der Benutzer (U) erneut im Bauwerk (B) anwesend ist (t₁), in Richtung Komforttemperatur (Tc) geht.

7. Verfahren nach Anspruch 6, wobei die Berechnung der Rückkehrtemperatur das Zeitintervall (δₜₘ) zwischen zwei Ortsbestimmungen zusätzlich zur Schätzung der Rückkehrzeit (Δtr) berücksichtigt.

8. Verfahren nach einem der vorstehenden Ansprüche, wobei der Schritt (c) den Erhalt der Ortsbestimmungsdaten von einem mobilen Datenendgerät (30) des Benutzers (U) umfasst, das Lokalisierungsmittel enthält.

9. Verfahren nach Anspruch 8, wobei der Schritt (c) die Ausgabe einer Frageanweisung (CQ) an das mobile Datenendgerät (30) umfasst, mit der das mobile Datenendgerät (30) beim Benutzer (U) seine Schätzung der Rückkehrzeit (Δtr) abfragt, so dass die Rückkehrtemperatur (Tr) je nach der Antwort des Benutzers (U) angepasst wird.

10. Verfahren nach einem der Ansprüche 8 und 9, wobei die Erkennung der Abwesenheit des Benutzers (U) entweder durch Vergleich von Ortsbestimmungsdaten des mobilen Datenendgeräts (30) des Benutzers (U) mit Referenzdaten der Ortsbestimmung des Bauwerks (B) erfolgt, oder durch die Erkennung der Abschaltung eines lokalen Netzes, oder durch die Erkennung der Abwesenheit über Näherungssensoren.

11. Verfahren nach einem der Ansprüche 8 bis 10, wobei der Schritt (c) eine Filterung der Ortsbestimmungsdaten umfasst, wobei die Filterung ermöglicht, die geostatischen Lagen zu erkennen.

12. Verfahren nach einem der vorstehenden Ansprüche, umfassend, wenn die Anwesenheit eines Benutzers (U) im Bauwerk (B) erkannt wird, ein Schritt (f) mit Ausgabe einer Anweisung an das Wärmeregulierungssystem (10) zur Temperaturregelung erfolgt, mit der das Wärmeregulierungssystem (10) wieder in den Standardfunktionsmodus übergeht.

13. Verfahren nach einem der vorstehenden Ansprüche, umfassend ein vorheriger Schritt (a0) mit Ausgabe einer Anweisung an das Wärmeregulierungssystem (10) zur Vorbegrenzung (CPL) vor der Abwesenheit des Benutzers (U) erfolgt, so dass die Komforttemperatur (Tc) beim Verlassen des Benutzers (U) schon erreicht ist.

14. Verfahren nach Anspruch 13, wobei die Anweisung zur Vorbegrenzung (PCL) durch das lokale Erlernen der Abwesenheiten des Benutzers (U) ausgelöst wird.

15. Verfahren nach einem der vorstehenden Ansprüche, wobei:
- der Schritt (a) für jeden Benutzer (U) des Bauwerks (B) eingesetzt wird,
- der Schritt (b) eingesetzt wird, wenn der Schritt (a) für jeden Benutzer (U) des Bauwerks überprüft ist,
- der Schritt (c) für jeden Benutzer (U) des Bauwerks (B) eingesetzt wird,
- der Schritt (d) anhand der Schätzung der geringsten erzielten Rückkehrzeit (Δtr) eingesetzt wird.

16. Verfahren nach einem der vorstehenden Ansprüche, wobei:
- das Wärmeregulierungssystem (10) ein Heizsystem umfasst,
- die Rückkehrtemperatur (Tr) niedriger als die Komforttemperatur (Tc) ist, die selbst niedriger als die Dauertemperatur (Tv) ist.

17. Verfahren nach einem der vorstehenden Ansprüche 1 bis 15, wobei:
- das Wärmeregulierungssystem (10) ein Klimasystem umfasst,
- die Rückkehrtemperatur (Tr) höher als die Komforttemperatur (Tc) ist, die selbst höher als die Dauertemperatur (Tv) ist.

18. Temperaturregelungseinheit eines Bauwerks, die ein Temperaturregulierungssystem (10) und einen Datenverarbeitungsserver (20) umfasst, der ein Datenspeichermodul (23) und ein Datenverarbeitungsmodul (22) umfasst und so konfiguriert ist, dass er Folgendes einsetzt:
- ein Modul für die Erkennung einer Abwesenheit des Benutzers (U),
- ein Modul für die Auslösung einer Anweisung zur Funktionsbegrenzung (CL) des Systems (10), mit der das Wärmeregulierungssystem (10) die Regelung der Temperatur (T) des Bauwerks (B) bei der Dauertemperatur (Tv) unterbricht,
- ein Modul für die Schätzung der Rückkehrzeit des Benutzers (U) je nach den Ortsbestimmungsdaten des Benutzers (U),
- ein Modul für die Bestimmung einer Rückkehrtemperatur (Tr) je nach einer sich von der Dauertemperatur (Tv) und der Rückkehrzeit unterscheidenden Komforttemperatur (Tc), wobei die Rückkehrtemperatur (Tr) so berechnet wird, dass das Wärmeregulierungssystem (10) während der Rückkehrzeit (Δtr) die Komforttemperatur (Tc) erreichen kann,
- ein Modul für die Ausgabe eines Rückkehrsollwerts (CR) an das Wärmeregulierungssystem (10), mit dem das Wärmeregulierungssystem die Temperatur (T) des Bauwerks auf die Rückkehrtemperatur (Tr) regelt,
wobei die Komforttemperatur (Tc) eine Abweichung von 0,5 bis 5°, bevorzugt von 0,5 bis 2°, und am besten von 0,8 bis 1,2° gegenüber der Dauertemperatur (Tv) aufweist.

19. Bauwerk (B) mit einem Temperaturregulierungssystem (10) und einem Thermostat (11), das mit einem Server (20) nach vorstehendem Anspruch oder einem geeigneten Server verbunden ist, um ein Verfahren nach einem der Ansprüche 1 bis 17 einzusetzen.

## Claims

1. A method for regulating the temperature of a built structure equipped with a thermal regulation system configured to regulate temperature of said built structure to a predetermined living temperature, in an operating mode by default, said method comprising, via a data-processing module, performing steps of:
(a) Detection of an absence of a user in the built structure,
(b) Emission to the thermal regulation system of an operation limitation instruction of said system by which the thermal regulation system interrupts regulation of the temperature of the built structure to the living temperature,
(c) Estimation as a function of geolocation data of the user of a return travel time of the user,
(d) Determination of a return temperature as a function of a comfort temperature different to the living temperature and of said return travel time, the return temperature being calculated to let the thermal regulation system reach the comfort temperature during the return travel time,
(e) Emission to the thermal regulation system of a return instruction, by which the thermal regulation system regulates the temperature of the built structure to the return temperature,
wherein the comfort temperature has a spread from 0.5 to 5°, preferably from 0.5 to 2°, and preferably from 0.8 to 1.2°, relative to the living temperature.

2. The method according to claim 1, wherein the limitation instruction of step (b) consists of stopping the thermal regulation system, said system then operating in a mode known as free from the start of absence of the user.

3. The method according to claim 1, wherein step (e) is performed only if the temperature of the built structure is outside an interval defined by the living and comfort temperatures.

4. The method according to claim 1, wherein step (b) comprises, when the temperature of the built structure reaches a predefined extreme temperature, emission to the thermal regulation system of a temperature maintenance instruction, by which the thermal regulation system regulates the temperature of the built structure to said extreme temperature.

5. The method according to claim 4, wherein the extreme temperature, the comfort temperature and the return temperature are determined by the data-processing module as a function of at least thermal modeling data of the built structure (B) comprising meteorological data recovered from a central server and thermal characteristics of the built structure.

6. The method according to claim 1, wherein steps (c) to (e) are repeated such that the return temperature tends towards the comfort temperature at the time when the user is again present in the built structure.

7. The method according to claim 6, wherein calculation of the return temperature takes into account the time interval between two geolocations in addition to estimation of the return travel time.

8. The method according to claim 1, wherein step (c) comprises receipt of the geolocation data from a mobile terminal of the user comprising location means.

9. The method according to claim 8, wherein step (c) comprises emission to the mobile terminal of a question instruction by which the mobile terminal queries the user on his estimation of the return travel time, such that the return temperature is adapted as a function of the response of the user.

10. The method according to claim 8, wherein detection of the absence of the user is carried out either by comparison of geolocation data of the mobile terminal of the user and geolocation reference data of the built structure, or by detection of disconnection from a local network, or by detection of absence via presence sensors.

11. The method according to claim 8, wherein step (c) comprises filtering of the geolocation data, said filtering identifying geostatic situations.

12. The method according to claim 1, comprising, when the presence of a user is detected in the built structure, a step (f) for emission to the thermal regulation system of a regulation instruction of the temperature by which the thermal regulation system switches back to the operating mode by default.

13. The method according to claim 1, comprising an prior step (a0) for emission to the thermal regulation system of a pre-limitation instruction before absence of the user, such that when the user leaves, the comfort temperature is already attained.

14. The method according to claim 13, wherein the pre-limitation instruction is triggered by local learning of absences of the user.

15. The method according to claim 1, wherein:
- step (a) is performed for each user of the built structure,
- step (b) is performed if step (a) is verified for each user of the built structure,
- step (c) is performed for each user of the built structure ,
- step (d) is performed by using the lowest possible estimation of the return travel time.

16. The method according to claim 1, wherein:
- the thermal regulation system comprises a heating system,
- the return temperature is less than the comfort temperature, in turn less than the living temperature.

17. The method according to claim 1, wherein:
- the thermal regulation system comprises an air-conditioning system,
- the return temperature is greater than the comfort temperature, in turn greater than the living temperature.

18. A temperature-regulation unit of a built structure, comprising a temperature-regulation system, a data-processing server, comprising a data storage module and a data-processing module, configured to execute:
- a module for detection of absence of the user,
- a module for triggering an operation limitation instruction of said system by which the thermal regulation system interrupts regulation of the temperature of the built structure to the living temperature,
- a module for estimation of the return travel time of the user as a function of geolocation data of the user,
- a module for determination of a return temperature as a function of a comfort temperature different to the living temperature and of said return travel time, the return temperature being calculated to let the thermal regulation system reach the comfort temperature during the return travel time,
- a module for emission to the thermal regulation system of a return instruction, by which the thermal regulation system regulates the temperature to the return temperature,
wherein the comfort temperature has a spread from 0.5 to 5°, preferably from 0.5 to 2°, and preferably from 0.8 to 1.2°, relative to the living temperature.

19. A built structure comprising a temperature-regulation system, and a thermostat connected to a server, according to the preceding claim, or to a server adapted to execute a method according to claim 1.
